# EUROPÄISCHE PATENTSCHRIFT

(11) **EP 1 972 826 B1**
(45) Veröffentlichungstag und Bekanntmachung des Hinweises auf die Patenterteilung: **08.04.2015**
(21) Anmeldenummer: 08002995.2
(22) Anmeldetag: 19.02.2008
(51) Int. Cl.: F16F 13/10, F16F 13/26

(54) **Hydrolager**
Hydraulic support
Support hydraulique

(30) Priorität: 23.03.2007 DE 102007014710
(43) Veröffentlichungstag der Anmeldung: 24.09.2008
(73) Patentinhaber: TrelleborgVibracoustic GmbH, 64293 Darmstadt (DE)
(72) Erfinder: Sckuhr, Mathias Dr., 69488 Birkenau (DE); Wittmershaus, Volker, 69488 Birkenau (DE)
(74) Vertreter: Flügel Preissner Kastel Schober

(56) Entgegenhaltungen:
- EP-A- 0 541 902
- WO-A-03/081080
- DE-A1- 3 515 023
- DE-A1-102004 034 723
- US-A- 4 778 158

## Beschreibung

Die Erfindung betrifft ein Hydrolager, umfassend einen Kern und ein Gehäuse, die durch eine im Wesentlichen hohlkegelförmige Tragfeder aus gummielastischem Werkstoff miteinander verbunden sind und einen Arbeitsund einen Ausgleichsraum, die mit Dämpfungsflüssigkeit gefüllt und strömungsleitend miteinander verbunden sind, wobei der Arbeits- und der Ausgleichsraum auf ihren einander axial zugewandten Seiten durch eine Trennwand voneinander getrennt sind, wobei die Trennwand einen den Arbeitsund den Ausgleichsraum verbindenden Dämpfungskanal zur Dämpfung tieffrequenter großamplitudiger Schwingungen aufweist und einen Düsenkäfig umfasst, der durch zwei mit axialem Abstand zueinander benachbart angeordnete Düsenscheiben gebildet ist, wobei in dem durch den Abstand gebildeten Spalt eine Membran zur Isolierung höherfrequenter kleinamplitudiger Schwingungen schwingfähig angeordnet ist, wobei die Membran elektromagnetisch schaltbar ist, wobei als Schaltelement innerhalb des Spalts ein magnetisches Elastomer angeordnet ist, das durch mindestens eine elektrische Spule mit Rückschluss aktivierbar ist, zur Freigabe/Arretierung der Membran innerhalb des Spalts und wobei eine der Düsenscheiben eine axial in Richtung der benachbarten Düsenscheibe offene Ausnehmung aufweist, in der das Schaltelement relativbeweglich angeordnet ist.

### Stand der Technik

Ein solches Hydrolager ist aus der US 4,778,158 bekannt. Die Membran besteht aus einem ferromagnetischen Werkstoff, wobei die Membran einen außenumfangsseitigen Rand aufweist, der durch eine im Wesentlichen C-förmige Einfassung eingefasst ist. Diese Einfassung besteht bevorzugt aus einem magnetischen Elastomer, das die Schaltbarkeit der Membran aus ferromagnetischem Werkstoff unterstützt. Der Ausgleichsraum ist durch eine aus einem elastomeren Werkstoff bestehende Kammerwand begrenzt, wobei auf der dem Ausgleichsraum abgewandten Seite der Kammerwand, also außerhalb von Arbeits- und Ausgleichsraum, die elektrische Spule zur Freigabe / Arretierung der Membran angeordnet ist.

Aus der DE 10 2004 034 723 A1 ist ein magnetostriktives Element und dessen Verwendung bekannt. Das magnetostriktive Element umfasst mindestens eine Vorrichtung zur Erzeugung eines magnetischen Feldes und mindestens ein Formteil aus porösem Polymer, enthaltend ferromagnetische Teilchen. Das poröse Polymer kann ein Elastomerschaum sein.

Aus der EP 0 541 902 A1 ist ein Gummilager bekannt, bei dem ein flüssigkeitsgefüllter Arbeitsraum an zumindest einer Stelle seiner Wandung durch eine hohlkegelförmige Tragfeder aus gummielastischem Werkstoff und an zumindest einer anderen Stelle seiner Wandung durch eine in Richtung des Arbeitsraums hin- und herbewegbare Membran begrenzt ist, wobei die Membran in einem Teilbereich von ringförmiger Gestalt ist, aus einem weichmagnetischen Werkstoff besteht und mit dem Teilbereich relativbeweglich in einen Spalt zwischen einander gegenüberliegenden Magnetspulen hineinragt, die innerhalb in Richtung der Kompensationswand geöffneten Nuten zweier Spulenträger aus weichmagnetischem Werkstoff angeordnet und mit einer elektrischen Wechselspannung beaufschlagbar sind. Die Membran weist eine zentrale Durchbrechung auf, in der eine kreisförmige Verbindungsöffnung angeordnet ist. Die Verbindungsöffnung kann als Dämpfungsöffnung zur Dämpfung tieffrequenter Schwingungen mit großen Amplituden ausgebildet sein. Die einander gegenüberliegenden Magnetspulen sind als Hubmagneten ausgebildet und innerhalb in Richtung der Membran offenen Nuten zweier Spulenträger aus weichmagnetischem Werkstoff angeordnet. Die Membran ist innerhalb eines Spalts zwischen den Magnetspulen angeordnet und wird in ihrer Mittellage durch eine elastische Federung federnd abgestützt. Die elastische Federung besteht aus elastomerem Werkstoff, die gleichzeitig eine Abdichtung von Arbeits- und Ausgleichsraum gegenüber der Steuereinheit mit den Magnetspulen ermöglicht.

Aus der WO 03/081080 A1 ist ein Hydrolager bekannt, bei dem zwischen dem Arbeits- und Ausgleichsraum ein Düsenkäfig angeordnet ist, der durch zwei axial zueinander benachbart angeordnete Düsenscheiben gebildet ist. Zwischen den Düsenscheiben ist eine Membran aus gummielastischem Werkstoff schwingfähig angeordnet. Außenumfangsseitig ist der Düsenkäfig von einem Elektromagnet umgeben, zur Betätigung eines Absperrkörpers, der aus einem magnetischen Elastomer besteht. Zusätzlich zu einem ersten Dämpfungskanal, der sich außenumfangsseitig im Düsenkäfig erstreckt und den Arbeits- und Ausgleichsraum flüssigkeitsleitend miteinander verbindet, ist ein weiterer Dämpfungskanal vorgesehen, der durch dichtes Aufsetzen des entlang eines Verstellwegs verschiebbaren Absperrkörpers auf einen zugeordneten Sitz verschließbar ist. Der elektomagnetisch verschließbare weitere Dämpfungskanal bildet einen Bypass, bezogen auf den ersten Dämpfungskanal zwischen Arbeits- und Ausgleichsraum.

Weitere Hydrolager sind allgemein bekannt, wobei ein Hydrolager einen Kern umfasst und ein Gehäuse, die durch eine im Wesentlichen hohlkegelförmige Tragfeder aus gummielastischem Werkstoff miteinander verbunden sind. Vorbekannte Hydrolager weisen einen Arbeits- und einen Ausgleichsraum auf, die mit Dämpfungsflüssigkeit gefüllt und strömungsleitend miteinander verbunden sind, wobei der Arbeits- und der Ausgleichsraum auf ihren einander axial zugewandten Seiten durch eine Trennwand voneinander getrennt sind. Die strömungsleitende Verbindung zwischen Arbeits- und Ausgleichsraum erfolgt durch einen Dämpfungskanal zur Dämpfung tieffrequenter großamplitudiger Schwingungen. Die Trennwand umfasst einen Düsenkäfig, der durch zwei mit axialem Abstand zueinander benachbart angeordnete Düsenscheiben gebildet ist, wobei in dem durch den Abstand gebildeten Spalt eine Membran zur Isolierung höherfrequenter kleinamplitudiger Schwingungen schwingfähig angeordnet ist.

Aus der DE 196 12 153 A1 ist ein solches Hydrolager bekannt. Die Membran ist starr ausgebildet, und ein Stellmittel zum Einstellen des Freiwegs der Membran ist vorgesehen. Durch das Stellmittel soll die Stärke der Einspannung der Membran an den jeweiligen Betriebszustand einer Verbrennungskraftmaschine angepasst werden. Das Stellmittel ist gummielastisch und schlauchförmig ausgeführt, wird gleichzeitig als Flüssigkeitsabdichtung eingesetzt und kann mit einem pneumatischen oder einem hydraulischen Steuermedium betätigt werden. Der Freiweg der Membran wird derart an die jeweiligen Betriebszustände angepasst, dass die Membran im Leerlaufbetrieb nahezu völlig freigegeben wird, wohingegen für andere Betriebszustände oberhalb der Leerlaufdrehzahl eine völlige Blockade der Membran vorgesehen ist. Das Stellmittel kann auch stufenlos steuer- oder regelbar sein.

Ein weiteres Hydrolager ist aus der EP 0 440 536 B1 bekannt. Der Arbeits- und der Ausgleichsraum sind durch eine starre Trennwand voneinander getrennt, die in Richtung der eingeleiteten Schwingungen schwingfähig ist, wobei der starren Trennwand elektrische Erreger zugeordnet sind, die mit wechselnden Kräften auf die Trennwand wirken. Die Schwingfähigkeit der Trennwand ergibt sich dadurch, dass diese gegenüber dem Gehäuse durch gummielastische Federelemente elastisch nachgiebig angeordnet ist. Die Trennwand besteht aus einem ferromagnetischen Material, wobei die elektrischen Erreger als elektrische Spulen ausgebildet sind, um "Gegenschwingungen" auf die Trennwand aufzubringen.

### Darstellung der Erfindung

Der Erfindung liegt die Aufgabe zugrunde, ein Hydrolager der eingangs genannten Art dadurch weiterzuentwickeln, dass dieses bessere Gebrauchseigenschaften, insbesondere eine verbesserte Isolierung höherfrequenter kleinamplitudiger Schwingungen aufweist und zusätzlich eine schaltbare Membran.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Hydrolager vorgesehen, bei dem das magnetische Elastomer durch einen magnetischen Schaum gebildet ist, wobei beiderseits des Schaltelements eine Spule und ein Rückschluss angeordnet sind, wobei die Spule und der Rückschluss jeweils in einer Düsenscheibe angeordnet sind. Die Membran ist unabhängig vom Material, aus dem sie besteht, schaltbar. Auch Membranen aus einem nicht-magnetischen Material, zum Beispiel aus einem üblichen gummielastischen elastomeren Werkstoff, sind dadurch schaltbar. Die Schaltbarkeit wird dadurch erreicht, dass das Schaltelement durch einen magnetischen Schaum gebildet ist, der durch elektrische Spulen mit Rückschluss aktivierbar ist. Dadurch besteht die Möglichkeit, die Membran besonders gut an die jeweiligen Gegebenheiten des Anwendungsfalles anpassen zu können.

Das magnetische Elastomer ist durch durch einen magnetischen Schaum gebildet. Gegenüber einem zwar magnetischen Elastomer, das jedoch nicht geschäumt ist, hat ein magnetischer Schaum den Vorteil, dass er in sich kompressibel ist, dass sich der Schaum bei axialen Auslenkbewegungen der Membran weich an die jeweilige Düsenscheibe anlegt und dass Anschlaggeräusche beim Schalten der Membran dadurch auf ein Minimum reduziert sind.

Die Spule und der Rückschluss sind in einer Düsenscheibe angeordnet. Zur Ansteuerung der Spule muss diese elektrisch leitend mit einer Spannungsquelle verbunden sein.

Eine der Düsenscheiben weist eine axial in Richtung der benachbarten Düsenscheibe offene Ausnehmung auf, in der das Stellelement relativbeweglich angeordnet ist. Wird die Bestromung des Schaltelements unterbrochen, vergrößert es sein Volumen, bewegt sich dadurch aus der Ausnehmung in Richtung Membran und klemmt die Membran innerhalb des Spalts fest.

Bevorzugt besteht die Membran aus einem gummielastischen Werkstoff. Membranen aus gummielastischen Werkstoffen können in großen Stückzahlen kostengünstig hergestellt und einfach an den jeweiligen Anwendungsfall angepasst werden.

Nach einer ersten Ausgestaltung können Membran und Schaltelement unabhängig voneinander und jeweils separat hergestellt sein. Bei einer solchen Ausgestaltung ist von Vorteil, dass die Membran sehr gut hinsichtlich der Isolierung höherfrequenter kleinamplitudiger Schwingungen ausgelegt sein kann, weil sie ausschließlich diese Aufgabe zu lösen hat; die Aufgabe einer gleichzeitigen Schaltbarkeit braucht die Membran in einem solchen Fall nicht zu lösen. Die Schaltbarkeit wird durch das Schaltelement erreicht, das auf die Membran wirkt.

Der Schaum besteht bevorzugt aus SBR oder EPBM, in dem ferromagnetische Partikel angeordnet sind.

Die Partikel bestehen bevorzugt aus Eisenpulver.

Bei den genannten Werkstoffen ist von Vorteil, dass diese eine gute Funktion bedingen und/oder ein gutes Preis-Leistungs-Verhältnis haben.

Die ferromagnetischen Partikel sind in dem Schaum bevorzugt im Wesentlichen homogen verteilt und weisen bevorzugt eine Größe zwischen 10µm und 1 mm auf.

Besteht die Membran aus einem magnetischen Elastomer, ist es ausreichend, wenn die Membran im Bereich, in dem Spule und Rückschluss angeordnet sind, magnetische Partikel aufweist.

Nach einer besonders einfachen Ausgestaltung besteht die Möglichkeit, dass die Membran das Schaltelement bildet und aus dem magnetischen Elastomerwerkstoff besteht. Die Membran kann aus einem magnetischen Elastomerschaum bestehen. Sekundärer Schaltelemente - bezogen auf die Membran - bedarf es daher nicht. Das Schaltelement ist in einem solchen Fall einstückig ineinander übergehend und materialeinheitlich mit der Membran ausgebildet, bildet also einen integralen Bestandteil, und kann beispielsweise dadurch erreicht werden, dass ferromagnetische Partikel in der Membran angeordnet sind. Durch eine Betätigung des Schaltelements kann die Membran innerhalb des Spalts zwischen den Düsenscheiben arretiert und dadurch funktionstechnisch außer Betrieb gesetzt werden.

Die lose Anordnung der Membran innerhalb des Spalts ist für eine effiziente Isolierung akustisch störender höherfrequenter kleinamplitudiger Schwingungen von Vorteil. Im Leerlauf der angeschlossenen Verbrennungskraftmaschine ist das Schaltelement in Form des Magnetschaums magnetisch durchflutet, d.h. stromdurchflossen. Das Schaltelement ist zusammengezogen und die Membran bewegt sich schwingfähig innerhalb des Düsenkäfigs phasenverschoben zu den eingeleiteten Schwingungen und isoliert dadurch die vergleichsweise höherfrequenten Leerlaufschwingungen. Im Fahrbetrieb, also oberhalb der Leerlaufdrehzahl, wird die Bestromung des Schaltelements unterbrochen und das Schaltelement dehnt sich aus. Die Membran ist dann relativ unbeweglich starr innerhalb des Düsenkäfigs angeordnet. Tieferfrequente großamplitudige Schwingungen werden dadurch besonders effizient gedämpft, wobei die Dämpfung dadurch erfolgt, dass die innerhalb des Dämpfungskanals angeordnete Flüssigkeitsmasse phasenverschoben zu den eingeleiteten Schwingungen zwischen Arbeits- und Ausgleichsraum hin und her schwingt.

Anstelle der losen Anordnung von Einfassung und Membran innerhalb des Düsenkäfigs besteht auch die Möglichkeit, dass das Schaltelement in Form der Einfassung innerhalb des Spalts im magnetisch durchfluteten, also zusammengezogenen Zustand, leicht vorgespannt, jedoch noch schwingfähig angeordnet ist. Wird die Bestromung des Schaltelements demgegenüber unterbrochen, wird die Einfassung und die Membran innerhalb des Spalts arretiert.

Das Schaltelement weist bevorzugt eine zur Ausnehmung im Wesentlichen kongruente Gestalt auf. Dadurch wird die zuverlässige Schaltbarkeit erhöht, da die Gefahr einer Verkantung des Schaltelements in der Ausnehmung auf ein Minimum reduziert ist.

Bevorzugt ist das Schaltelement in dem Düsenkäfig angeordnet, der den Ausgleichsraum begrenzt.

Die Düsenscheiben bestehen bevorzugt aus einem polymeren Werkstoff oder Stahl. Ein polymerer Werkstoff hat den Vorteil eines niedrigen Gewichts.

Die Düsenscheiben weisen jeweils einen Zentralbereich mit einer Perforation auf, der von der Spule und dem Rückschluss außenumfangsseitig umschlossen ist.

Die Membran ist bevorzugt außenumfangsseitig vom Dämpfungskanal umschlossen. Die Perforation des Zentralbereichs der Düsenscheiben ist dafür vorgesehen, dass die Membran mit der Dämpfungsflüssigkeit aus Arbeits- und Ausgleichsraum beaufschlagbar ist.

Dadurch, dass der Dämpfungskanal die Membran außenumfangsseitig umschließt, ist von Vorteil, dass durch eine solche Ausgestaltung der Dämpfungskanal eine große Länge und dadurch ein größtmögliches Volumen aufweist, was im Hinblick auf eine größtmögliche Flüssigkeitsmasse innerhalb des Dämpfungskanals und im Hinblick auf eine möglichst effiziente Dämpfung tieffrequenter großamplitudiger Schwingungen von Vorteil ist.

### Kurzbeschreibung der Zeichnung

Vier Ausführungsbeispiele des erfindungsgemäßen Hydrolagers werden nachfolgend an Hand der Figuren 1 bis 4 näher beschrieben. Diese zeigen einen geschalteten und nicht-geschalteten Zustand, jeweils im Halbschnitt.
- Fig. 1: zeigt ein erstes Ausführungsbeispiel des erfindungsgemäßen Hydrolagers,
- Fig. 2: zeigt ein zweites Ausführungsbeispiel des erfindungsgemäßen Hydrolagers,
- Fig. 3: zeigt ein drittes Ausführungsbeispiel des erfindungsgemäßen Hydrolagers und
- Fig. 4: zeigt ein viertes Ausführungsbeispiel des erfindungsgemäßen Hydrolagers.

### Ausführung der Erfindung

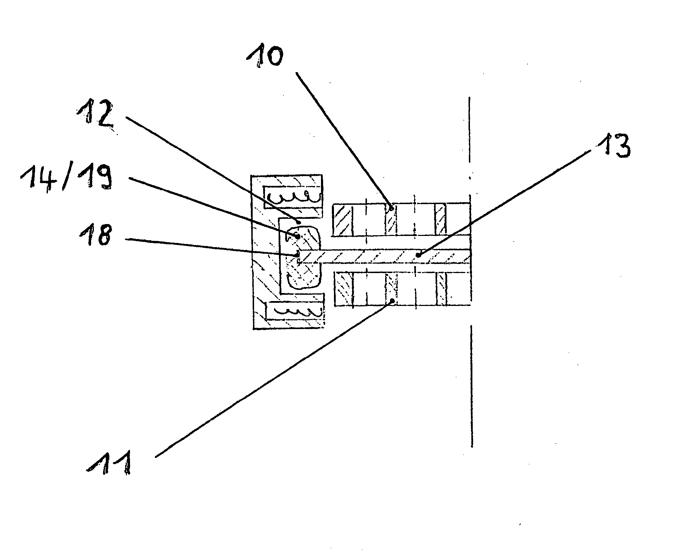

In den Figuren 1 bis 4 ist jeweils ein Hydrolager gezeigt, dessen Kern 1 mit einer Verbrennungskraftmaschine und dessen Gehäuse 2 mit dem Chassis eines Kraftfahrzeugs verbunden ist. Der Kern 1 und das Gehäuse 2 sind durch die hohlkegelförmig ausgebildete Tragfeder 3, die aus einem gummielastischen Werkstoff besteht, miteinander verbunden, wobei der Arbeitsraum 4 durch den Kern 1, die Tragfeder 3 und die Trennwand 7 begrenzt ist. Der Ausgleichsraum 5 ist auf der dem Arbeitsraum 4 axial abgewandten Seite durch eine rollbalgförmig ausgebildete, im Wesentlichen drucklos Volumen aufnehmende Abschlussmembran 25 und die Trennwand 7 begrenzt, wobei die Abschlussmembran 25 auf der dem Ausgleichsraum 5 axial abgewandten Seite über die Öffnung 26 im Gehäuse 2 mit der Atmosphäre in Verbindung steht. Der Arbeits- 4 und der Ausgleichsraum 5 sind jeweils mit Dämpfungsflüssigkeit 6 gefüllt und durch den Dämpfungskanal 8, der durch die Trennwand 7 begrenzt ist, flüssigkeitsleitend miteinander verbunden. Einen Bestandteil der Trennwand 7 bildet der Düsenkäfig 9, der aus den beiden Düsenscheiben 10, 11 besteht, die einander mit axialem Abstand benachbart zugeordnet sind, wobei in dem durch den Abstand gebildeten Spalt 12 eine Membran 13 aus gummielastischem Werkstoff zur Isolierung höherfrequenter kleinamplitudiger Schwingungen schwingfähig angeordnet ist.

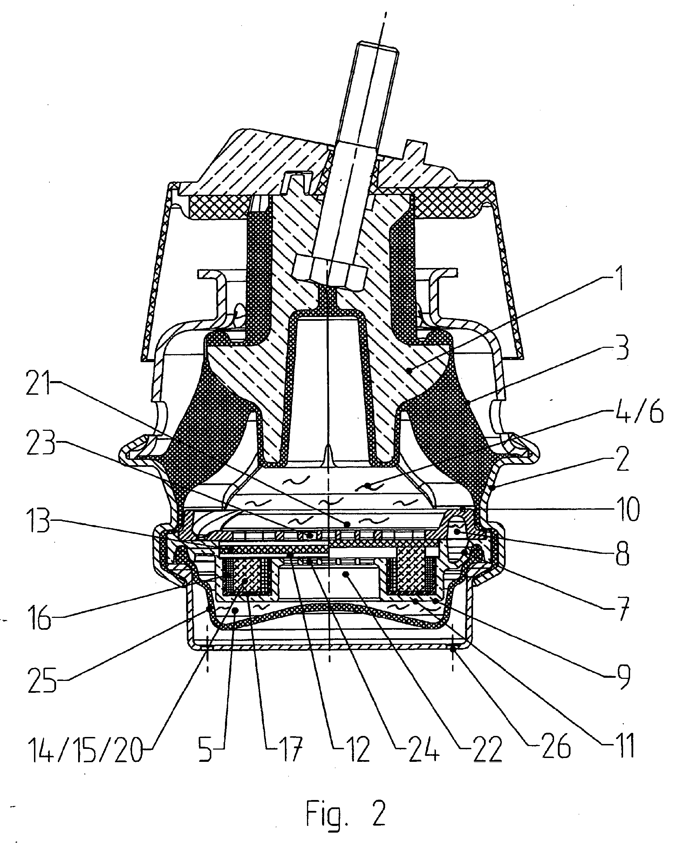

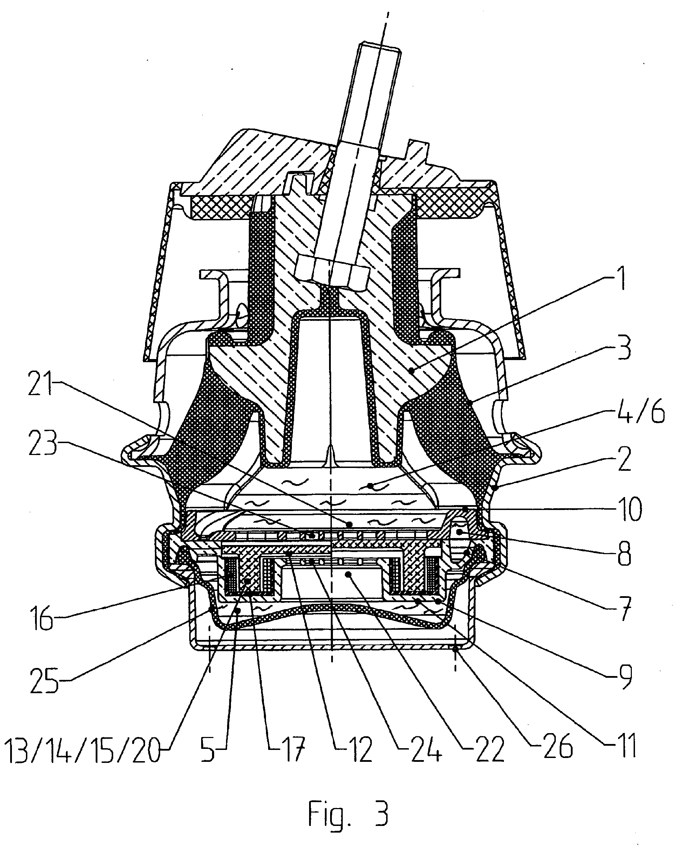

Um gute Gebrauchseigenschaften oberhalb der Leerlaufdrehzahl der Verbrennungskraftmaschine, also während des Fahrbetriebs, zu erreichen, hat es sich als vorteilhaft bewährt, wenn die Membran 13 innerhalb des Spalts 12 arretiert ist. Die Arretierung der Membran 13 erfolgt durch ein innerhalb des Spalts 12 angeordnetes Schaltelement 14 aus einem magnetischen Elastomerschaum, wobei das Schaltelement 14 in den Figuren 1 und 2, bezogen auf die Membran 13, separat erzeugt ist. Das Schaltelement ist zumindest im Wirkungsbereich der elektrischen Spule 16 und des Rückschlusses 17 angeordnet und wird durch Strombeaufschlagung derart aktiviert, dass die Membran 13 innerhalb des Spalts 12 zwischen den Düsenscheiben 10, 11 axial in Richtung der eingeleiteten Schwingungen frei hin- und herbeweglich ist. In Figur 3 ist die Membran 13 selbst als Schaltelement 14 ausgebildet und besteht aus einem magnetischen Elastomerschaum.

Figur 1 unterscheidet sich von den Figuren 2 und 3 nur im Bereich des Düsenkäfigs 9 und der Membran 13.
In Figur 1 ist der außenumfangsseitige Rand 18 der Membran 13, die aus einem gummielastischen Werkstoff besteht, durch eine im Wesentlichen C-förmige Einfassung 19 eingefasst, wobei die Einfassung 19 das Schaltelement 14 bildet.
Die magnetisch durchflutete, d.h. bestromte Einfassung 19 und auch die Membran 13 sind lose innerhalb des Spalts 12 axial zwischen den Düsenscheiben 10, 11 angeordnet. Davon abweichend besteht auch die Möglichkeit, dass die Membran 13 im Bereich der Einfassung 19 zwischen den beiden Düsenscheiben 10, 11 mit geringer axialer Vorspannung gehalten ist. Die Anordnung der Membran 13 innerhalb des Spalts 12 ist abhängig vom jeweiligen Einzelfall. Die Einfassung 19 bildet das Schaltelement 14 und besteht aus einem magnetischen Elastomerschaum.
Im magnetisch nicht-durchfluteten, d.h. nicht-bestromten Zustand ist die Membran 13 geklemmt.

In Figur 2 ist das zweite Ausführungsbeispiel gezeigt, bei dem in der Düsenscheibe 11 eine axial in Richtung der benachbarten Düsenscheibe 10 offene Ausnehmung 20 vorgesehen ist, in der das im Wesentlichen kongruent gestaltete Schaltelement 14 aus einem magnetischen Elastomerschaum relativ beweglich angeordnet ist. Bei einer unterbrochenen Strombeaufschlagung des Schaltelements 14 dehnt sich dieses axial in Richtung des Spalts 12 aus, bewegt sich aus der Ausnehmung 20 in Richtung der Membran 13 und klemmt diese an der axial benachbarten Oberfläche der Düsenscheibe 10 fest. Wird das Schaltelement 14 demgegenüber bestromt und das Schaltelement 14 ist magnetisch durchflutet, also im Leerlaufbetrieb der Verbrennungskraftmaschine, "schrumpft" das Schaltelement 14, bewegt sich allmählich wieder zurück in die Ausnehmung 20 und gibt die Membran 13 dadurch frei.

In den hier gezeigten Ausführungsbeispielen ist das magnetische Elastomer durch einen magnetischen Schaum gebildet.

In Figur 3 ist das dritte Ausführungsbeispiel gezeigt, das sich von den zuvor beschriebenen Ausführungsbeispielen dadurch unterscheidet, dass die Membran 13 aus einem magnetischen Elastomerschaum besteht. Das Schaltelement 14 bildet einen integralen Bestandteil der Membran 13, wobei die Schaltbarkeit der Membran 13 dadurch erreicht wird, dass ferromagnetische Partikel in der Membran 13 angeordnet sind. Sekundärer Schaltelemente 14, wie in den Figuren 1 und 2 gezeigt, bedarf es daher nicht.

Im Leerlauf der Verbrennungskraftmaschine ist das Schaltelement 14 bestromt (linker Teil der Darstellung). Die Membran 13 ist im Leerlauf leicht fixiert / vorgespannt und ausreichend schwingfähig.
Im Fahrbetrieb, also oberhalb der Leerlaufdrehzahl, ist das Schaltelement 14 demgegenber unbestromt (rechter Teil der Darstellung) und die Membran 13 ist durch das integrierte, ausgedehnte Schaltelement 14 innerhalb des Düsenkäfigs 9 starr angeordnet.

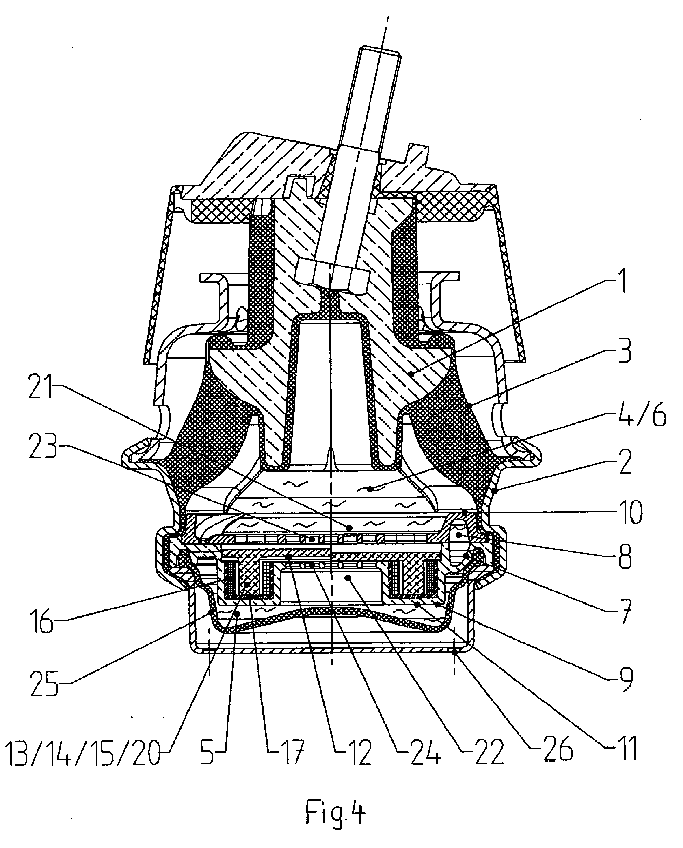

Figur 4 zeigt das vierte Ausführungsbeispiel, das sich von Figur 3 dadurch unterscheidet, dass die Membran 13 im Leerlaufbetrieb der Verbrennungskraftmaschine völlig lose ist und sich dadurch eine ausgezeichnete Schwingungsisolierung ergibt. In diesem Betriebszustand (hier links dargestellt) ist das in die Membran 13 integrierte Schaltelement 14 unbestromt.

Oberhalb der Leerlaufdrehzahl der Verbrennungskraftmaschine (hier rechts dargestellt) ist das Schaltelement 14 demgegenüber bestromt und hält die Membran 13 dadurch starr innerhalb des Düsenkäfigs 9.

Die Düsenscheiben 10, 11 bestehen in den hier gezeigten Ausführungsbeispielen aus einem polymeren Werkstoff oder Stahl und weisen in ihrem Zentralbereich 21, 22 eine Perforation 23, 24 auf. Sowohl die Spule 16 und der Rückschluss 17 als auch der Dämpfungskanal 8 sind radial außenseitig der Perforation 23, 24 angeordnet. Die Größe der Kraft auf das Schaltelement 14 sowie die Effizienz der Dämpfung ist dadurch besonders vorteilhaft.

## Patentansprüche

1. Hydrolager, umfassend einen Kern (1) und ein Gehäuse (2), die durch eine im Wesentlichen hohlkegelformige Tragfeder (3) aus gummielastischem Werkstoff miteinander verbunden sind und einen Arbeits- (4) und einen Ausgleichsraum (5), die mit Dämpfungsflüssigkeit (6) gefüllt und strömungsleitend miteinander verbunden sind,
wobei der Arbeits- (4) und der Ausgleichsraum (5) auf ihren einander axial zugewandten Seiten durch eine Trennwand (7) voneinander getrennt sind,
wobei die Trennwand (7) einen den Arbeits- (4) und den Ausgleichsraum (5) verbindenden Dämpfungskanal (8) zur Dämpfung tieffrequenter großamplitudiger Schwingungen aufweist und einen Düsenkafig (9) umfasst, der durch zwei mit axialem Abstand zueinander benachbart angeordnete Düsenscheiben (10, 11) gebildet ist,
wobei in dem durch den Abstand gebildeten Spalt (12) eine Membran (13) zur Isolierung höherfrequenter kleinamplitudiger Schwingungen schwingfahig angeordnet ist,
wobei die Membran (13) elektromagnetisch schaltbar ist,
wobei als Schaltelement (14) innerhalb des Spalts (12) ein magnetisches Elastomer (15) angeordnet ist, das durch mindestens eine elektrische Spule (16) mit Rückschluss (17) aktivierbar ist, zur Freigabe/Arretierung der Membran (13) innerhalb des Spalts (12) und
wobei eine der Düsenscheiben (11) eine axial in Richtung der benachbarten Düsenscheibe (10) offene Ausnehmung (20) aufweist, in der das Schaltelement (14) relativbeweglich angeordnet ist,
**dadurch gekennzeichnet, dass** das magnetische Elastomer (15) durch einen magnetischen Schaum gebildet ist und dass beiderseits des Schaltelements (14) eine Spule (16) und ein Rückschluss (17) angeordnet sind, wobei die Spule (16) und der Rückschluss (17) jeweils in einer Düsenscheibe (10, 11) angeordnet sind.

2. Hydrolager nach Anspruch 1, **dadurch gekennzeichnet, dass** der Schaum aus SBR oder EPDM besteht, in dem ferromagnetische Partikel angeordnet sind.

3. Hydrolager nach Anspruch 2, **dadurch gekennzeichnet, dass** die Partikel aus Eisenpulver bestehen.

4. Hydrolager nach einem der Anspruche 1 bis 3, **dadurch gekennzeichnet, dass** das Schaltelement (14) eine zur Ausnehmung (20) im Wesentlichen kongruente Gestalt aufweist.

5. Hydrolager nach einem der Anspruche 1 bis 4, **dadurch gekennzeichnet, dass** die Membran (13) das Schaltelement (14) bildet und aus dem magnetischen Elastomer besteht und dass das Schaltelement (14) einstückig ineinanderübergehend und materialeinheitlich mit der Membran (13) ausgebildet ist.

6. Hydrolager nach einem der Anspruche 1 bis 5, **dadurch gekennzeichnet, dass** die Düsenscheiben (10, 11) aus einem polymeren Werkstoff bestehen.

7. Hydrolager nach einem der Anspruche 1 bis 6, **dadurch gekennzeichnet, dass** die Düsenscheiben (10, 11) jeweils einen Zentralbereich (21, 22) mit einer Perforation (23, 24) aufweisen, der von der Spule (16) und dem Rückschluss (17) außenumfangsseitig umschlossen ist.

8. Hydrolager nach einem der Anspruche 1 bis 7, **dadurch gekennzeichnet, dass** die Membran (13) außenumfangsseitig vom Dämpfungskanal (8) umschlossen ist.

## Claims

1. A hydro-mount, comprising a core (1) and a housing (2), which are connected to each other by a substantially hollow-cone-shaped suspension spring (3) made of a rubber-elastic material, and a working chamber (4) and an equalisation chamber (5), which are filled with a damping liquid (6) and connected to each other in a flow-conducting manner,
the working chamber (4) and the equalisation chamber (5) being separated from each other on their axially facing sides by a partition wall (7),
the partition wall (7) having a damping channel (8) for damping low-frequency, large-amplitude vibrations, which connects the working chamber (4) and the equalisation chamber (5), and comprising an orifice cage (9) formed by two orifice discs (10, 11) disposed adjacent to each other with an axial spacing from each other,
with a membrane (13) for insulting high-frequency, small-amplitude vibrations being disposed, in a manner capable of vibrating, in the gap (12) formed by the spacing,
with the membrane (13) being electromagnetically switchable,
with a magnetic elastomer (15), which can be activated by at least one electric coil (16) with a back iron (17), being disposed as a switching member (14) within the gap (12), for releasing/locking in place the membrane (13) within the gap (12), and
with one of the orifice discs (11) having a recess (20) which is axially open in the direction of the adjacent orifice disc (10) and in which the switching member (14) is disposed so as to be capable of relative movement,
**characterised in that** the magnetic elastomer (15) is formed by a magnetic foam, and that a coil (16) and a back iron (17) are disposed on both sides of the switching member (14), the coil (16) and the back iron (17) each being disposed in an orifice disc (10, 11).

2. The hydro-mount according to claim 1, **characterised in that** the foam is made of SBR or EPDM, in which ferromagnetic particles are disposed.

3. The hydro-mount according to claim 2, **characterised in that** the particles consist of iron powder.

4. The hydro-mount according to any one of the claims 1 to 3, **characterised in that** the switching member (14) has a shape that is substantially congruent with the recess (20).

5. The hydro-mount according to any one of the claims 1 to 4, **characterised in that** the membrane (13) forms the switching member (14) and is made of a magnetic elastomer and that the switching member (14) is configured to integrally transition into, and to be of the same material as, the membrane (13).

6. The hydro-mount according to any one of the claims 1 to 5, **characterised in that** the orifice discs (10, 11) are made of a polymer material.

7. The hydro-mount according to any one of the claims 1 to 6, **characterised in that** the orifice discs (10, 11) each comprise a central portion (21, 22) with a perforation (23, 24) enclosed on the side of the outer circumference by the coil (16) and the back iron (17).

8. The hydro-mount according to any one of the claims 1 to 7, **characterised in that** the membrane (13) is enclosed on the side of the outer circumference by the damping channel (8).

## Revendications

1. Support hydraulique, comprenant un noyau (1) et un boîtier (2) qui sont reliés l'un à l'autre par un ressort porteur (3) sensiblement en forme de cône creux en matériau présentant l'élasticité du caoutchouc, et comprenant une chambre de travail (4) et une chambre de compensation (5) qui sont remplies d'un liquide d'amortissement (6) et qui sont reliées l'une à l'autre de manière à laisser passer un écoulement,
dans lequel la chambre de travail (4) et la chambre de compensation (5) sont séparées l'une de l'autre par une paroi de séparation (7) sur leurs côtés qui se font mutuellement face en sens axial,
dans lequel la paroi de séparation (7) comporte un canal d'amortissement (8) qui relie la chambre de travail (4) et la chambre de compensation (5) pour amortir les oscillations à basse fréquence et à forte amplitude, et comporte une cage à buse (9) qui est formée par deux plaques à buse (10, 11) agencées voisines l'une de l'autre à distance axiale,
dans lequel une membrane (13) destinée à l'isolation des oscillations à haute fréquence et à faible amplitude est agencée de manière à pouvoir osciller dans la fente (12) formée par ladite distance,
dans lequel la membrane (13) est capable d'être commandée par voie électromagnétique,
dans lequel un élastomère magnétique (15) est agencé à l'intérieur de la fente (12) à titre d'élément de commande (14), qui peut être activé par au moins une bobine électrique (16) avec couplage magnétique (17) pour libérer/arrêter la membrane (13) à l'intérieur de la fente (12), et dans lequel l'une des plaques à buse (11) comporte un évidement (20) ouvert axialement en direction de la plaque à buse (10) voisine, dans lequel est agencé l'élément de commande (14) avec possibilité de déplacement relatif,
**caractérisé en ce que** l'élastomère magnétique (15) est formé par une mousse magnétique, et **en ce que** sur les deux côtés de l'élément de commande (14) sont agencés une bobine (16) et un couplage magnétique (17), de sorte que la bobine (16) et le couplage magnétique (17) sont respectivement agencés dans une plaque à buse (10, 11).

2. Support hydraulique selon la revendication 1, **caractérisé en ce que** la mousse est en SBR ou en EPDM, dans lequel sont agencées des particules ferromagnétiques.

3. Support hydraulique selon la revendication 2, **caractérisé en ce que** les particules sont en poudre de fer.

4. Support hydraulique selon l'une des revendications 1 à 3, **caractérisé en ce que** l'élément de commande (14) présente une configuration sensiblement identique à celle de l'évidement (20).

5. Support hydraulique selon l'une des revendications 1 à 4, **caractérisé en ce que** la membrane (13) forme l'élément de commande (14) et est réalisée avec l'élastomère magnétique, et **en ce que** l'élément de commande (14) est réalisé d'une seule pièce avec la membrane (13) en un matériau unitaire et de manière à se transformer l'un dans l'autre.

6. Support hydraulique selon l'une des revendications 1 à 5, **caractérisé en ce que** les plaques à buse (10, 11) sont en un matériau polymère.

7. Support hydraulique selon l'une des revendications 1 à 6, **caractérisé en ce que** les plaques à buse (10, 11) comprennent chacune une zone centrale (21, 22) avec une perforation (23, 24), ladite zone étant entourée du côté périphérique extérieur par la bobine (16) et le couplage magnétique (17).

8. Support hydraulique selon l'une des revendications 1 à 7, **caractérisé en ce que** la membrane (13) est entourée du côté périphérique extérieur par le canal d'amortissement (8).
